(19) Europäisches Patentamt
European Patent Office
Office européen des brevets

(11) Publication number: **0 068 695**
**A1**

# (12) EUROPEAN PATENT APPLICATION

(21) Application number: **82303046.5**

(22) Date of filing: **11.06.82**

(51) Int. Cl.[3]: **C 08 L 79/04**
// (C08L79/04, 81/06, 67/02)

(30) Priority: **25.06.81 US 277356**

(43) Date of publication of application: **05.01.83**
**Bulletin 83/1**

(84) Designated Contracting States: **BE CH DE FR GB IT LI NL SE**

(71) Applicant: **Exxon Research and Engineering Company, P.O.Box 390 180 Park Avenue, Florham Park New Jersey 07932 (US)**

(72) Inventor: **Patton, Tad LeMarre, 5010 Glen Haven Drive, Baytown Texas (US)**

(74) Representative: **Northover, Robert Frank et al, ESSO CHEMICAL LIMITED ESSO RESEARCH CENTRE P.O. Box 1, Abingdon Oxfordshire, OX13 6BB (GB)**

## (54) Blends of poly (parabanic acids) with other polymers.

(57) Homogeneous blends of poly (parabanic acid) resins and aromatic polyether sulfones and terephthalate polyesters are obtained by plasticizing the poly (parabanic acid) resins. The poly (parabanic acid) resins are plasticized with conventional plasticizers for these polymers, such as aromatic polyesters, N,N-dialkyl aromatic sulfonamides, aromatic nitriles, aromatic sulfones and aromatic sulfoxides. Additionally it has been found that polyether sulfones which are free of aliphatic groups are also plasticizers for the poly (parabanic acid) resin.

EP 0 068 695 A1

# BLENDS OF POLY (PARABANIC ACIDS) WITH OTHER POLYMERS

## Field of the Invention

The present invention relates to blends of poly (parabanic acid) resins and their precursors poly (iminoimidazolidinediones) with their other polymers and the method of obtaining said blends, specifically polyether sulfones and polyesters of terephthalic acid.

Both the poly (iminoimidazolidinediones) and poly (parabanic acids) and their method of preparation are known and described in detail in U.S. Pat. No. 3,661,859. The poly (parabanic acids) may also be prepared by other processes, such as shown in U.S. Pat. No. 3,609,113.

The poly (iminoimidazolidinediones) may be formed by the reaction of hydrogen cyanide with a diisocyanate or mixture of diisocyanates, the reaction of a dicyanoformamide with a diisocyanate or mixtures of diisocyanates, or the polymerization of a cyanoformamidyl isocyanate and contain a 1,3-imidazolidinedione-1,3-diyl ring of the following structures in the repeating units:

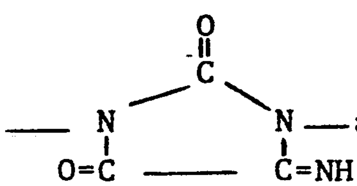
and/or
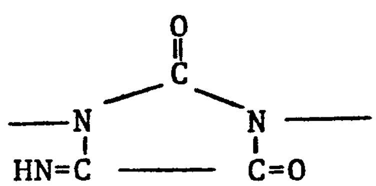

wherein NH is in the 4 or 5 position.

The poly (parabanic acids) also designated as poly (1,3-imidazolidine-2,4,5-triones) may be prepared, for example, by the acid hydrolysis of poly (iminoimidazolidinediones) and contain the imidazolidinetrione ring in the repeating unit:

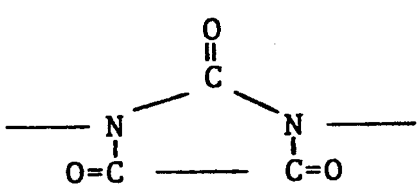

U.S. Pat. No. 3,609,113 and German Patent No. 1,770,146 describe other methods for preparing polymers which contain the poly (parabanic acid) ring.

The polymers may contain both imino-1,3-imidazolidinedione-1,3-diyl rings and imidazolidinetrione-1,3-diyl rings; thus the present polymers may be broadly characterized as having the repeating unit:

$$-\left[ Q - R \right]_n-$$

wherein Q is

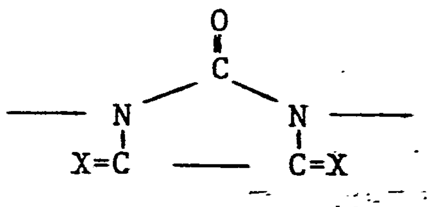

wherein X is O or NH, provided that at least one X is O, R is an organic moiety which may be aliphatic, alicyclic, aromatic or mixtures thereof, and n is sufficiently large to produce a solid product.

The R is the organic moiety of the diisocyanate when the polymer is produced according to the procedure in U.S. Pat. No. 3,661,859. Thus, the diisocyanates may be selected from a broad group having a large variety of organic moieties. The organic moieties of the diisocyanate may be substituted with groups such as alkyl, aryl, halogen, sulfoxy, sulfonyl, alkoxy, aryloxy, oxo, ester, alkylthio, arylthio, nitro and the like which do not react with the isocyanate group. Functional groups which have active hydrogen atoms, (e.g., carboxylic acids, phenols, amines, etc.) should not be present. Specific diisocyanates which may be used are set out in U.S. Pat. No. 3,661,859.

Some of the parabanic acid polymers have been found to have high glass transition temperatures, and thus are especially suitable as magnetic tapes (where good dimensional stability at high temperatures is required), films for use in flexible printed circuits, cable wraps, etc., for fibers such as tire cord fibers (where high tensile strength and modulus are required), for moldings for electrical connectors, bearings, magnetic wire insulation, coatings for cables, cookware, glass fabrics, industrial belts (where high temperatures are required) and the like.

However, many of the present polymers decompose when they are heated at or above their glass transition temperatures and as a result they cannot be molded or extruded. Previously these polymers could be processed only by solution

methods or by a powder coating technique which also requires a solvent.

Aromatic polysulfones are better known than the poly (parabanic acid) resins and have wide commercial use. The methods of preparing aromatic polysulfones are described in British Patent Specifications No.'s 1,016,245; 1,060,246; 1,078,243; 1,109,842; 1,122,192; 1,133,561; 1,153,035; 1,153,528 and 1,177,183, and German Specification No. 2,038, 168. They are thermoplastic materials of high softening point and may be fabricated by melt extrusion. Although they are resistant to chemical degradation, some of the polysulfones exhibit surface damage such as crazing with highly non-polar solvents such as acetone.

It has been found that blends of poly (parabanic acid) resins and/or their precursors with polyether sulfones or polyesters of terephthalic acid produce extrudable polymer compositions having excellent physical and chemical properties. The resultant blends are still high temperature polymers and are highly resistant to chemical attack by non polar solvents and are soluble in highly polar solvents.

U.S. Pat. No. 4,110,318 discloses that polyesters, polyethers, polyamides, polyurethanes, polyolefins, polyacetals, polyepoxides, polyimides, polyamidines, polyimide diisocyanates, and polyhydantoins may be added to finished poly (parabanic acid) polymers. However, it has been found that the presence of aliphatic hydrocarbon groups in materials, including polymers, makes the materials incompatible with the poly (parabanic acids) that is, melts are not formed. The formulation of the polymer blends is no simple task and an important part of the present invention is the method of obtaining the homogenous blends of the polymer components.

The present invention is a stable meltable composition comprising:

(a) from 10 to 90 weight percent of a composition of heterocyclic polymers characterized in the repeating unit by the tri-substituted 1,3-imidazolidine-1,3-diyl ring:

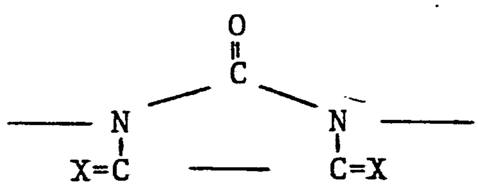

wherein X = O or NH, provided at least one X is O or more specifically polymers having the repeating unit:

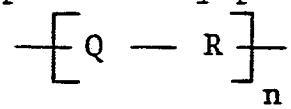

wherein Q is

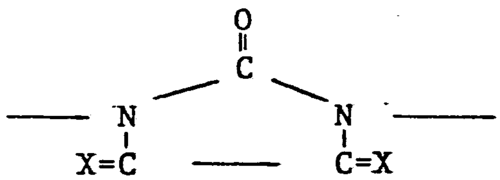

and X has the significance set out above, R is an organic moiety which may be aliphatic, alicyclic, aromatic or mixtures thereof and n is sufficiently large to produce a solid product and a plasticizing amount of a plasticizer therefor, and

(b) (i) 90 to 10 weight percent of a polyester polymer of terephthalic acid and a plasticizing amount of a plasticizer for (a); (ii) an aromatic polyether sulfone and a plasticizing amount of a plasticizer; or (iii) an aromatic polyether sulfone which is free of aliphatic groups and if desired a plasticizing amount of a plasticizer.

The method making the homogenous composition of the present invention involves the formation of a melt of the two polymer components. It has been found that the formation of homogeneous blends of (parabanic acid) polymers or their precursors (for convenience the term PPA will be used to refer to both herein) depends on the character of the specific polymer and rarely can the determination of compatibility be made without actual evaluation, since variables not previously appreciated may arise to subvert the theoretical determination.

Generally a plasticizer is required to form a melt of PPA, since without the plasticizer, temperatures so high are required, that the PPA begins to undergo decomposition. The preferred manner of preparing the PPA-aromatic polyether

sulfone blends and PPA-terephthalic acid polyester blends is to form a melt of the PPA and a plasticizer and to add the second polymer to the melt.

However, it has been found that a certain class of aromatic polyether sulfones are plasticizers for PPA and may be blended therewith to form a melt without any other plasticizer.

Generally aromatic polyether sulfones are polysulfones with ether linkages in the backbone of the polymer, for example repeating units of the structure:

(I) 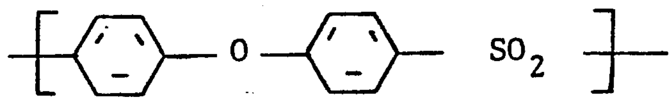

(II) 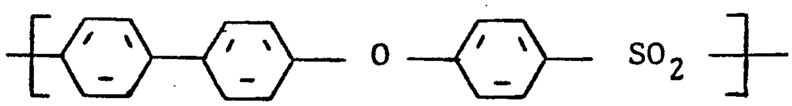

(III) 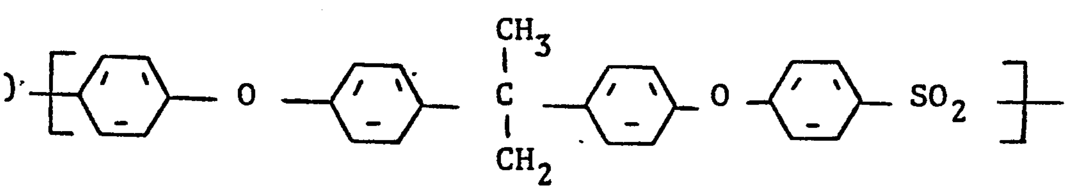

with the repeating structure being of sufficient length to form a solid product.

According to the present invention aromatic polyether sulfones of the type of structures I and II, i.e., free of aliphatic radicals are plasticizers for PPA under certain conditions, whereas those with aliphatic groups such as structure III are not directly compatible with PPA and require a plasticizer.

The polyether sulfones, which are free from aliphatic groups are plasticizers for PPA when a melt of the polyether sulfone is formed and the PPA added thereto, otherwise a plasticizer is required.

The polyesters of terephthalic acids have repeating units of the structure of

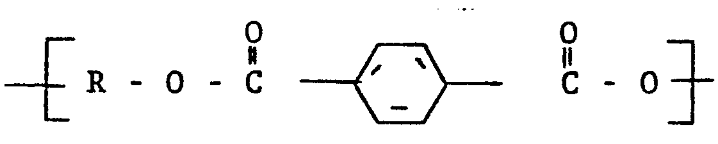

where R is an aliphatic radical having 2 to 8 carbon atoms such as ethylene, propylene, tetramethylene, pentamethylene, hexamethylene, heptamethylene and octamethylene and the repeating structure being of sufficient length to produce a solid product.

The polyesters used in the present compositions are not plasticizers for PPA, since they have aliphatic groups in the chains and the PPA must be mixed with a suitable plasticizer in order to form blends with the polyesters.

Thus, the blends according to the present invention are formed by forming a melt of PPA and a plasticizer and adding the second polymer thereto.

In the case of aromatic polyether sulfones which are free of aliphatic groups, the polyether sulfones may serve as both the plasticizer and second polymer. This is achieved by forming a melt of the aromatic polyether sulfone and adding the particulated, e.g., powdered, PPA thereto.

The polymers useful in the invention may be poly (iminoimidazolidinediones) characterized by a tri-substituted 1,3-imidazolidine-1,3-diyl ring of the following structure:

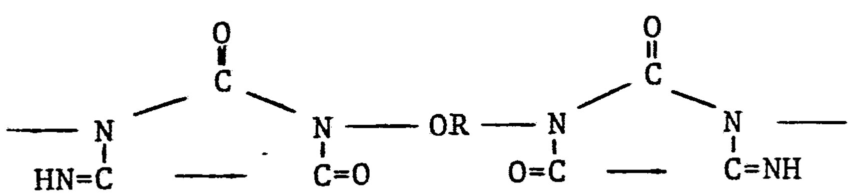 ,

poly (parabanic acids) characterized by a tri-substituted 1,3-imidazolidine-1,3-diyl ring of the following structure:

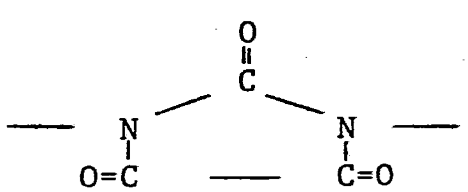

or more specifically, polymers of the general structure:

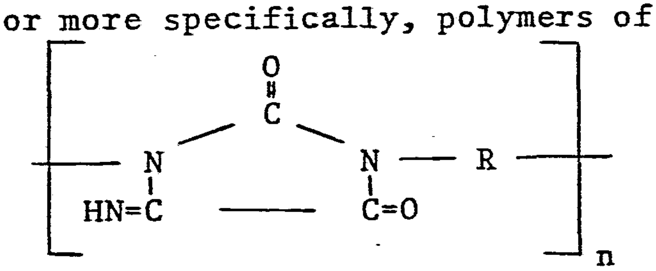 or

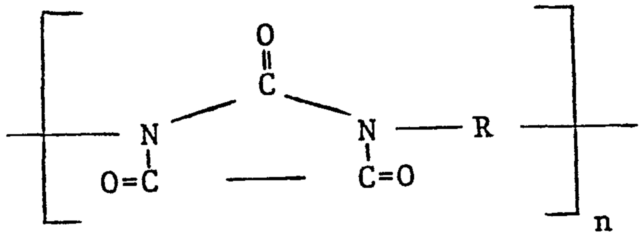 respectively

wherein R and n have the significance given above.

The term "plasticizing amount" as used herein means that amount of designated plasticizer which is incorporated in and compatible with the polymer to form a homogeneous composition. Generally, the plasticizer incorporated into the polymer will comprise from 10 to 50 weight percent of total weight of the heterocyclic polymer and plasticizer, although the plasticizers may be used in slightly smaller amounts, i.e., about 5% and in somewhat larger amounts, e.g., up to about 60%. These compositions may be further characterized as "extrudable". Films of the present compositions can be sealed by heating.

There are a number of suitable materials which will plasticize the poly (parabanic acid) resins and the poly (iminoimidazolidinediones) according to the present invention for example:

(1) aromatic polyester monomers of the structure:

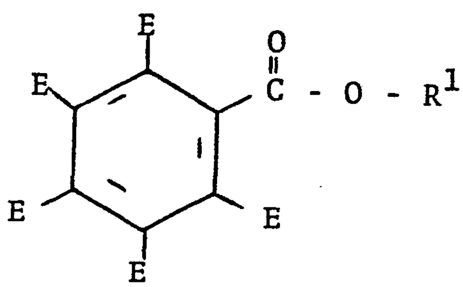

wherein E is $-\overset{O}{\overset{\|}{C}}-O-R^1$ or H, provided at least one E is $-\overset{O}{\overset{\|}{C}}-O-R^1$, and $R^1$ is a radical independently selected from methyl, ethyl, phenyl, tolyl, benzyl or acetoxyethyl, such as dimethyl terephthalate, dimethyl isophthalate, dimethyl phthalate, diethyl terephthalate, diethyl isophthalate, diethyl phthalate, ethyl methyl terphthalate, ethyl methyl isophthalate, ethyl methyl phthalate, diphenyl isophthalate, diphenylphthalate, ditolyl phthalate, dibenzyl

phthalate, trimethyl trimellitate, tetramethyl pyromellitate, tetraethyl pyromellitate, and bis (acetoxyethyl) terephthalate; also dibutyl-4,4' sulfonyl dibenzoate performed well as a plasticizer in this invention,

(2) N,N-dialkyl aromatic sulfonamides. The alkyl groups of the N,N-dialkyl aromatic sulfomamide may either be the same or different and have from 1 to 8 carbon atoms in either cyclic or alicyclic configuration and the aromatic moiety may contain alkyl substitutents, usually lower alkyl of 1 to 5 carbon atoms, i.e., alkaryl. The aryl or alkaryl moiety may be phenyl, tolyl, xylyl, naphthyl, and the like generally having 6 to 12 carbon atoms.

Illustrative examples of the N,N-dialkyl aromatic sulfonamides of the present invention are N,N-diethyl p-toluenesulfonamides (DETSA), N,N-diethyl p-toluene-sulfonamide (DMTSA), N,N-di(n-butyl) p-toluene sulfonamide (DBTSA), N,N-(cyanoethyl) p-toluene sulfonamide, N,N-dipropyl p-toluene sulfonamide, N-ethyl, N-cyanoethyl p-toluene sulfonamide, N,N-diethyl benzene sulfonamide, and N-(p-toluene sulfonyl) morpholine.

(3) Aromatic nitriles such as isophthalonitrile, phthalonitrile, methyl phthalonitrile, methyl isophthalonitrile, terephthalonitrile, 1,4-bis(cyanomethyl) benzene, 1,4-dicyanonaphthalene and 1,8-dicyanonaphthalene. In addition N-ethyl-p-toluene sulfonamide, and mixtures of o-toluene sulfonamide and p-toluene sulfonamide which are not very good plasticizers for the poly (parabanic acid) resins alone were quite satisfactory in the blend.

(4) Aromatic sulfones and (5) aromatic sulfoxides and specifically diaromatic sulfones and diaromatic sulfoxides represented by the formulas:

$$R^2 - SO_2 - R^3 \quad \text{or} \quad R^2 - SO - R^3$$

wherein $R^2$ and $R^3$ are like or unlike aryl radicals, alkaryl radicals and aralkyl radicals. Preferably, $R^2$ and $R^3$ radicals have 6 to 12 carbon atoms and include derivatives of benzene, biphenyl, naphthalene, toluene, xylene, and the like. Some specific compounds which may be used as plasticizers in the present invention include diphenyl sulfone, phenyl tolyl

sulfone, ditolyl sulfone, xylyl tolyl sulfone, dixylyl sulfone, tolyl paracumyl sulfone, phenyl biphenyl sulfone, tolyl biphenyl sulfone, xylyl biphenyl sulfone, phenyl naphthyl sulfone, tolyl naphthyl sulfone, sylyl naphthyl sulfone, diphenyl sulfoxide, phenyl tolyl sulfoxide, ditolyl sulfoxide, xylyl tolyl sulfoxide, dixylyl sulfoxide, tolyl paracumyl sulfoxide and phenyl biphenyl sulfoxide,

(6) and in the case of of the aromatic polyether sulfones not having aliphatic groups, N-alkyl aromatic sulfonamides.

Illustrative of the N-alkyl aromatic sulfonamides are N-ethyl-o-toluene sulfonamide, N-ethyl-o-toluene sulfonamide or mixtures thereof.

In addition to the specified plasticizers the various plasticizers may be further substituted with substituents which do not inhibit the plasticizing effect of the material nor react to degrade the polymer. In particular, substituent groups which have active hydrogen atoms (e.g., carboxylic acids, phenols, amines, etc.) should not be present. Examples of substituent groups which do not interfere with the plasticizing effect include alkoxy or aryloxy carbonyl groups, halogens such as bromine, chlorine or fluorine, nitrogroups, aryloxy or alkoxy groups, and sulfur containing groups, such that a plasticizer may fall into two or more of the groupings given above.

The compositions of the present invention may be employed in those functions where either of component polymers have been employed and exhibit a surprisingly wide range of superior properties.

For purposes of illustration, the majority of the examples illustrating the invention will be described with respect to a particular polymer. That is, a polyparabanic acid prepared from diphenylmethane diisocyanate e.g., a high performance polymer having the repeating unit shown below:

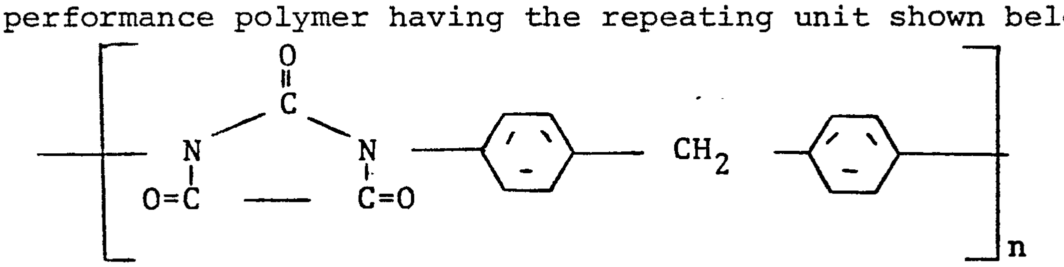

which is also designated as poly[1,4-phenylenemethylene-1, 4-phenylene-1,3-(imidazolidine-2,4,5-trione)] which is also designated in chemical abstracts as poly[(2,4,5-trioxo-1, 3 imidazolidinediyl)-1,4-phenylenemethylene-1,4-phenylene]. In the examples which follow this polymer is designated as PPA-M. It has a high glass transition temperature of 290°C and cannot be extruded or molded.

In general, the preferred polymers of the polymer-plasticizer components are those which have sufficient repeating units at room temperature to be solids.

In addition to the polymer and plasticizers, it is contemplated that other appropriate additives which are not detrimental to the compositions such as those employed to stabilize against oxidation or ultraviolet light, flame retardants, pigments, fillers and the like may be present.

The following examples illustrate the present invention and should not be construed as limiting the scope thereof:

<u>EXAMPLES</u>

The inherent viscosities (ηinh) in these examples were determined in an Ubbelohde tube at 25°C using a concentration of 0.5 g. of polymer in 100 ml. dimethylformamide.

All polymer powders used in these examples were dry.

<u>Example 1</u>

A mixture composed of 28 g. PPA-M, 7 g. of Santicizer 8 (Monsanto's tradename for N-ethyl-o,p (mixed) -toluenesulfonamide), and 35 g. of a solid polyether sulfone (ICI) described as having the repeating structure:

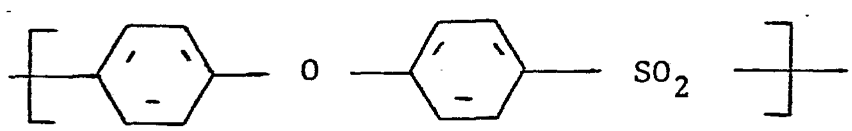

were mixed at 320°C in a Plasticorder mixer. A clear homogeneous melt formed. It was removed from the mixing head, cooled, and ground to a powder in a Wiley mill. The powder was molded into a clear pad at 600°F.

When a mixture of the two polymers were heated under the same conditions in the absence of the sulfonamide,

the PPA-M did not melt to form a homogeneous melt with the polysulfone which did melt.

Example 2

A mixture of 35 g. of a solid polyether sulfone (Union Carbide) having the repeating structure:

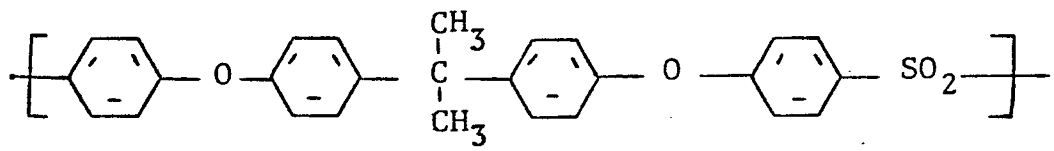

28 g. PPA-M and 7 g. of Saniticizer 8 formed a homogeneous melt when mixed at 320°C in a Plasticorder mixer. The melt was cooled and ground into a powder which was then molded into a flexible pad at 600°F.

Example 3

Twenty grams of a blend of 3.5 g. diethyl phthalate and 26.5 g. of PPA-M were melted in the mixing chamber of a Plasticorder at 290°C using a rotor speed of 40 rpm. After 7.5 minutes 34.75 g. of polyether sulfone of example 1 were added and a homogeneous melt soon formed. Even after 2 hours at 290°C the melt was still homogeneous.

Example 4

This example demonstrates that PPA-M will melt into molten polyether sulfone of example 1 without the aid of a plasticizer. The polyether sulfone seems to act as a plasticizer or processing aid of PPA-M.

Three grams of polyether sulfone were melted in the Plasticorder mixing head at 320°C using a rotor speed of 40 rpm. Then 27 g. of PPA-M were added over a period of 16 minutes. A homogeneous melt formed.

Comparative Example

Thirty grams of solid poly (tetramethylene terephthalate) were melted in the mixing chamber of a Plasticorder. The temperature was 290°C and the rotor speed was 40 rpm. Melting was complete within 2.5 minutes. Then 6.5 g. of PPA-M (inherent viscosity, 0.80) were added. After mixing 15 minutes at 290°C the PPA-M did not melt and blend into the polyester. This demonstrates that polytetramethylene terephthalate is not a plasticizer for PPA-M.

Example 5

Thirty grams of a blend of 5 g. of diethyl phthalate in 25 g. PPA-M were melted at 290°C in a Plasticorder mixing head using a rotor speed of 40 rpm. Then 25 g. of solid poly (tetramethylene terephthalate) were added. It melted and mixed into the PPA-M to form a homogeneous melt which was stable for 90 minutes. When cooled the mixture was not brittle.

The results of this example, when compared to that of the comparative example, demonstrates the necessity to form a melt of plasticized PPA-M prior to adding the polyester to it if a homogeneous melt is to be formed.

Example 6

Thirty grams of solid poly (tetramethylene terephthalate) were melted at 290°C in a Plasticorder mixer using a rotor of 40 rpm. Then a blend of 5 g. diethylphthalate in 25 g. PPA-M was slowly added to the hot melt. After mixing at 290°C for 10 minutes there was no evidence that the PPA-M was melting.

## CLAIMS

1. A stable meltable blend composition characterized by:

(a) from 10 to 90 weight percent of a composition comprising heterocyclic polymers having the repeating unit:

$$-\!\left[ Q - R \right]_n\!-$$

wherein Q is

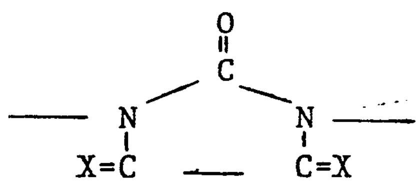

and X = O or NH, provided at least one X is O, R is an organic moiety which may be aliphatic, alicyclic, aromatic or mixtures thereof and n is sufficiently large to produce a solid product and a plasticizing amount of a plasticizer therefor, and

(b)(i) 90 to 10 weight percent of a polyester polymer of terephthalic acid and a plasticizing amount of a plasticizer for (a); (ii) an aromatic polyether sulfone and a plasticizing amount of a plasticizer; or (iii) an aromatic polyether sulfone which is free of aliphatic groups and if desired a plasticizing amount of a plasticizer.

2. A composition according to claim 1 characterized in that said heterocyclic polymers comprise at least 50 weight percent of the composition.

3. A composition according to claim 2 characterized in that said plasticizer comprises from about 5 up to 60 weight percent of said heterocyclic polymer and said plasticizer.

4. A blended composition according to claim 3 characterized in that the plasticizer is (1) an aromatic polyester monomer of the structure:

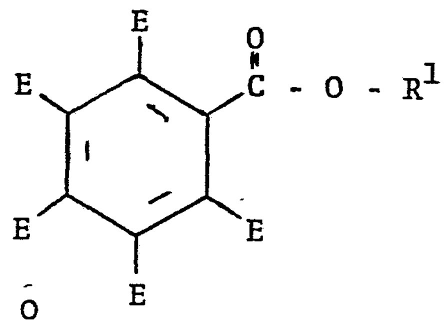

wherein E is $- \overset{O}{\overset{\|}{C}} - O - R^1$ or H, provided at least one E is $- \overset{O}{\overset{\|}{C}} - O - R^1$, and $R^1$ is a radical independently selected from methyl, ethyl, phenyl, tolyl, benzyl or acetoxyethyl; (2) an N,N-dialkyl aromatic sulfonamide wherein said alkyl groups have from 1 to 8 carbon atoms; (3) an aromatic nitrile; (4) a diaromatic sulfone having the formula $R^2 - SO_2 - R^3$; (5) diaromatic sulfoxide having the formula $R^2 - SO - R^3$ wherein $R^2$ and $R^3$ are like or unlike aryl radicals, alkaryl radicals or araryl radicals or (6) mixtures thereof.

5. A composition according to claim 4 characterized in that the plasticizer is an aromatic polyester monomer of the structure:

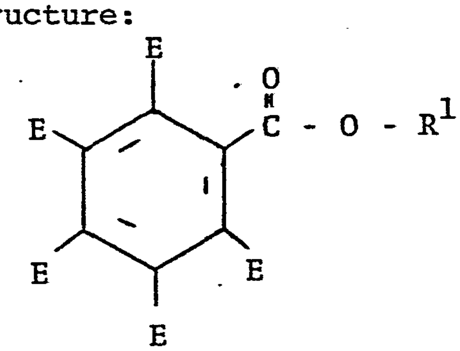

wherein E is $- \overset{O}{\overset{\|}{C}} - O - R^1$ or H, provided at least one E is $- \overset{O}{\overset{\|}{C}} - O - R^1$, and $R^1$ is a radical independently selected from methyl, ethyl, phenyl, tolyl, benzyl or acetoxyethyl.

6. A composition according to claim 4 characterized in that the plasticizer is an N,N-dialkyl aromatic sulfonamide wherein said alkyl groups have from 1 to 8 carbon atoms.

7. A composition according to claim 4 characterized in that the plasticizer is a diaromatic sulfone having the formula $R^2 - SO_2 - R^3$ wherein $R^2$ and $R^3$ are like or un-

like aryl radicals, alkaryl radicals or aralkyl radicals.

8. A composition according to claims 1 - 7 characterized in that the second polymer is an aromatic polyether sulfone which is free of aliphatic groups and the plasticizer is a mixture of N-ethyl-o-toluene sulfonamide and N-ethyl-p-toluene sulfonamide.

9. A composition according to claims 1 - 8 characterized in that the heterocyclic polymer has the structure:

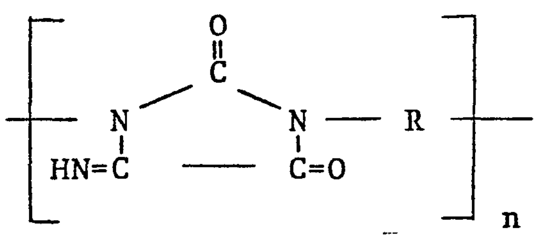

or

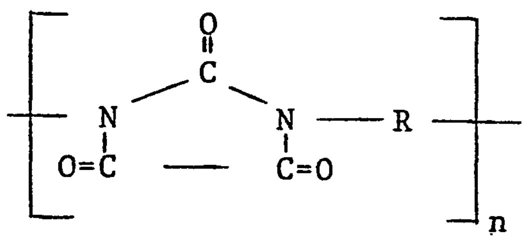

and that the R group is methylenediphenyl or oxydiphenyl.

10. A method of preparing a stable meltable composition according to claims 1 - 8 and containing:

(a) from 10 to 90 weight percent of a composition comprising heterocyclic polymers having the repeating unit:

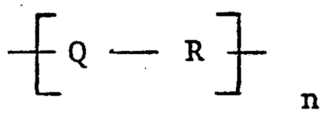

wherein Q is

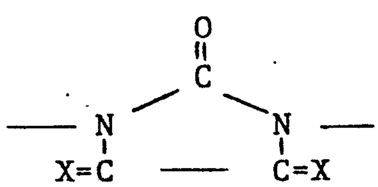

and X = O or NH, provided at least one X is O, R is an organic moiety which may be aliphatic, alicyclic, aromatic or mixtures thereof and n is sufficiently large to produce a solid product and a plasticizing amount of plasticizer therefor and

(b) from 10 to 90 weight percent of a second polymer from the group of aromatic polyether sulfone or polyester of terephthalic acid characterized by forming a homogeneous

melt mixture of (a) and (b).

11. A method according to claim 10 characterized in that said homogeneous melt mixture is formed by the steps of:

(A) forming a melt of (a) and

(B) adding to said melt a dry powder of (b).

12. A method of preparing a stable meltable composition according to claims 1 - 8 and containing:

(a) from 10 to 90 weight percent of a composition comprising heterocyclic polymers having the repeating unit:

$$-\!\!\left[ Q - R \right]\!\!-_{n}$$

wherein Q is

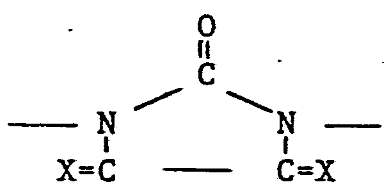

and X = O or NH, provided at least one X is O, R is an organic moiety which may be aliphatic, alicyclic, aromatic or mixtures thereof and n is sufficiently large to produce a solid product and

(b) from 10 to 90 weight percent of an aromatic polyether sulfone which is free of aliphatic groups characterized in that said homogeneous melt mixture is formed by the steps of:

(A) forming a melt of (b) and

(B) adding to said melt a dry powder of (a).

European Patent Office

# EUROPEAN SEARCH REPORT

Application number 0068695

EP 82303046.5

| DOCUMENTS CONSIDERED TO BE RELEVANT | | | CLASSIFICATION OF THE APPLICATION (Int. Cl. 3) |
|---|---|---|---|
| Category | Citation of document with indication, where appropriate, of relevant passages | Relevant to claim | |
| A | GB - A - 2 013 698 (EXXON RESEARCH AND ENGINEERING COMPANY)<br>+ Claims; examples; page 2, line 15 - page 3, line 37 +<br>-- | 1,3,4,6,8,9 | C 08 L 79/04//<br>(C 08 L 79/04<br>C 08 L 81/06<br>C 08 L 67/02) |
| A,D | US - A - 4 110 318 (H. GIESECKE et al.)<br>+ Claim 1; column 4, lines 39-46 +<br>-- | 1 | |
| A,D | US - A - 3 609 113 (G. SCHADE et al.)<br>+ Claim 1; column 1, lines 34-44; column 4, lines 17-28 +<br>---- | 1 | TECHNICAL FIELDS SEARCHED (Int.Cl. 3)<br>C 08 L 79/00<br>C 08 L 81/00<br>C 08 L 67/00<br>C 08 L 73/06 |

CATEGORY OF CITED DOCUMENTS

X: particularly relevant if taken alone
Y: particularly relevant if combined with another document of the same category
A: technological background
O: non-written disclosure
P: intermediate document
T: theory or principle underlying the invention
E: earlier patent document, but published on, or after the filing date
D: document cited in the application
L: document cited for other reasons

&: member of the same patent family, corresponding document

X The present search report has been drawn up for all claims

| Place of search | Date of completion of the search | Examiner |
|---|---|---|
| VIENNA | 05-10-1982 | KALTENEGGER |